# EUROPEAN PATENT SPECIFICATION

(11) **EP 1 887 854 B1**
(45) Date of publication and mention of the grant of the patent: **04.10.2017**
(21) Application number: 06760610.3
(22) Date of filing: 01.06.2006
(51) Int. Cl.: A23K 50/40, A23K 20/158, A23K 20/147, A23K 10/26

(54) **METHODS FOR ENHANCING PALATABILITY OF COMPOSITIONS FOR ANIMAL CONSUMPTION**
VERFAHREN ZUR VERBESSERUNG DER SCHMACKHAFTIGKEIT VON ZUSAMMENSETZUNGEN FÜR DEN TIERISCHEN VERZEHR
PROCÉDÉS D'AMÉLIORATION DE LA SAPIDITÉ DE COMPOSITIONS DESTINÉES À LA CONSOMMATION ANIMALE

(30) Priority: 01.06.2005 US 686512 P
(43) Date of publication of application: 20.02.2008
(73) Proprietor: Hill's Pet Nutrition, Inc., Topeka, KS 66603 (US)
(72) Inventor: FRIESEN, Kim, Gene, Topeka, Kansas 66614 (US); YAMKA, Ryan Michael, Succasunna, New Jersey 07876 (US)
(74) Representative: Wichmann, Hendrik
(86) International application number: PCT/US2006/021200
(87) International publication number: WO 2006/130738

(56) References cited:
- EP-A- 0 121 813
- WO-A-01/60166
- WO-A-01/84950
- WO-A-03/041514
- US-A- 5 004 524
- US-A- 5 004 624
- US-A- 5 968 569
- US-A1- 2003 228 400
- US-A1- 2004 197 455
- US-A1- 2004 247 741
- US-A1- 2004 247 741
- US-A1- 2005 008 759
- US-A1- 2005 042 362
- US-B1- 6 221 350
- US-B1- 6 365 211
- US-B1- 6 379 727

## Description

### CROSS-REFERENCE TO RELATED APPLICATIONS

This application claims priority to U.S. Provisional Application Serial No. 60/686,512 filed June 1, 2005.

### BACKGROUND OF THE INVENTION

### Field of the Invention

This invention relates generally to methods for enhancing the palatability of compositions for the use of poultry liver hydrolysate and poultry fat to animal consumption and to enhance the palatability of compositions for animal consumption.

### Description of the Prior Art

In designing foods for animals, particularly companion animals such as cats and dogs, optimal animal health or wellness through good nutrition is an important goal. However, even the most nutritious animal food is of little value if the animal rejects or refuses to eat the food, or if the animal's intake of the food is restricted because the animal finds the food unpalatable.

Enticing a companion or other animal to eat can be an expensive and time consuming chore. Foods with varying moisture content, supplements, and treats have been developed to encourage animals to eat. However, these solutions to the problem are not always effective.

Numerous potential palatability enhancers are available for pets, the only limitation appearing to be the imagination of the selector. Some are commercially available as flavoring agents. Others are prepared by family recipes handed down over generations. Others are continually being synthesized anew, extracted from natural products, or digested from various animal organs. The success of these materials in compositions for animal consumption is not predictable. Firstly, a potential palatability enhancer should be compatible with the composition during processing and packaging and it should possess a practical extended shelf-life. Secondly, the palatability enhancer should be appealing to the animal's sense of taste, smell, physical attractiveness and other attributes which appear in the overall composition. Thirdly, the palatability enhancer should be compatible with the animal after ingestion such that it does not cause any significant problems to the animal, particularly gastrointestinal problems. There is, therefore, a need for new palatability enhancers that increase the palatability of compositions for consumption by an animal.

WO 01/84950A discloses a hypoallergenic dietary composition for companion animals comprising a source of hydrolyzed protein, fat and carbohydrates.

WO 03/041514 A discloses the chemical treatment of vegetable oils or fats with sulfur or nitrogen donor compounds for animal food flavorings.

US2005/008759 A1 discloses shelf stabilizing agents including hydrolyzed protein, hydrolyzed protein derivatives and hydrolyzed protein emulsifier complexes which improve the shelf life of a pelletized grain protein-based resin formulation.

US2004/247741 discloses an appetizing agent containing trisodium pyrophosphate in combination with a flavor and taste enhancer for food for domestic animals.

WO 01/60166 discloses the incorporation of algal biomass into flavour or palatability enhancer mixtures that are included in animal food.

US-A-5 004 624 and EP-A-0 121 813 disclose semi-moist pet food having free gravy, and a process for preparation thereof.

US2004/019745S discloses extruded starch-based pet chew bodies.

### SUMMARY OF THE INVENTION

It is, therefore, an object of the present invention to provide palatability enhancers for compositions for animal consumption.

It is another object of the present invention to provide methods for enhancing palatability of compositions for animal consumption.

The present invention provides a use of poultry liver hydrolysate and poultry fat to enhance the palatability of a composition for animal consumption, wherein the composition comprises from 0.01% to 6% poultry liver hydrolysate by weight of the composition, and poultry fat, and wherein the composition further comprises at least one ingredient suitable for consumption by an animal.

The present invention further provides a method for enhancing palatability of a composition for consumption by an animal, the method comprising adding an amount of poultry liver hydrolysate to the composition, which amount is from 0.01% to 6% by weight of the composition, and adding poultry fat to the composition, wherein the poultry liver hydrolysate and poultry fat are used to enhance palatability of the composition.

The present invention further provides a use of poultry liver hydrolysate and poultry fat for increasing the ingestion frequency or the ingestion rate of a composition for consumption by an animal, which composition comprises from 0.01% to 6% poultry liver hydrolysate by weight of the composition and poultry fat for enhancing the palatability of the composition when fed to the animal, and at least one ingredient suitable for consumption by an animal.

The description provides methods for increasing the ingestion frequency of a composition for consumption by an animal.

The description provides methods for increasing the ingestion rate of a composition for consumption by an animal.

The description provides articles of manufacture in the form of kits that contain combinations of compositions useful for enhancing palatability of compositions for animal consumption.

Generally, the composition comprises from 0.01% to 6% poultry liver hydrolysate, poultry fat and at least one ingredient suitable for consumption by an animal which may be selected from the group consisting of protein, fat, carbohydrate, fiber, and combinations thereof, most preferably in amounts of from about 0.01% to about 6%. Kits comprising compositions for animal consumption and poultry liver hydrolysate are also described.

Compositions for animal consumption containing poultry liver hydrolysate and poultry fat exhibit surprisingly high palatability to an animal and therefore can be used to increase consumption and ingestion frequency by the animal, particularly for pet food compositions that otherwise are of inferior palatability to an animal.

Other and further objects, features and advantages of the present invention will be readily apparent to those skilled in the art.

### DETAILED DESCRIPTION OF THE INVENTION

### Definitions

The term "hydrolysate" means a chemically heterogeneous mixture comprising polypeptides and free amino acids wherein at least 85% of the amino acid content is comprised of oligopeptide chains, polypeptide chains (less than 18 kD), and free amino acids.

The term "polypeptide" means an amino acid chain of any length including oligopeptides, dipeptides, tripeptides, and larger peptides.

The term "enhanced palatability" means an increased palatability of a composition containing poultry liver hydrolysate or the combination of poultry liver hydrolysate and poultry fat when compared to substantially the same composition without poultry liver hydrolysate or the combination.

The term "ingestion rate" means the amount of a composition ingested per unit of time, e.g., at a meal.

The term "ingestion frequency" means the number of times an animal consumes a composition in a unit of time, e.g., an animal eats a meal three times a day.

The term "single package" means that the components of a kit are physically associated in or with one or more containers and considered a unit for manufacture, distribution, sale, or use. Containers include, but are not limited to, bags, boxes, bottles, shrink wrap packages, stapled or otherwise affixed components, or combinations thereof. A single package may be containers of individual food compositions physically associated such that they are considered a unit for manufacture, distribution, sale, or use.

The term "virtual package" means that the components of a kit are associated by directions on one or more physical or virtual kit components instructing the user how to obtain the other components, e.g., in a bag containing one component and directions instructing the user to go to a website, contact a recorded message, view a visual message, or contact a caregiver or instructor to obtain instructions on how to use the kit.

This invention is not limited to the particular methodology, protocols, and reagents described herein because they may vary. Further, the terminology used herein is for the purpose of describing particular embodiments only and is not intended to limit the scope of the present invention. As used herein and in the appended claims, the singular forms "a," "an," and "the" include plural reference unless the context clearly dictates otherwise, e.g., reference to "a poultry liver hydrolysate" includes a plurality of such poultry liver hydrolysates.

Unless defined otherwise, all technical and scientific terms and any acronyms used herein have the same meanings as commonly understood by one of ordinary skill in the art in the field of the invention. Although any methods and materials similar or equivalent to those described herein can be used in the practice of the present invention, the preferred methods, devices, and materials are described herein.

The present invention is defined by the methods and uses as set out in the claims.

### The Invention

In one aspect, the present invention provides a use of poultry liver hydrolysate and poultry fat to enhance the palatability of a composition for animal consumption, wherein the composition comprises from 0.01% to 6% poultry liver hydrolysate by weight of the composition, and poultry fat, and wherein the composition further comprises at least one ingredient suitable for consumption by an animal. Preferably the poultry liver hydrolysate is chicken liver hydrolysate. The invention is based upon the novel discovery that adding poultry liver hydrolysate and poultry fat to a composition for consumption by an animal enhances palatability of the composition and increases the likelihood that an animal will consume the composition. Adding poultry liver hydrolysate and poultry fat to a composition for consumption also increases the ingestion frequency and ingestion rate of the composition.

The poultry liver hydrolysate useful in the present invention is derived from poultry livers, including, but not limited to, livers from chickens (cocks and hens), capons, guineas, pigeons, turkeys, ducks, and geese. The hydrolysate can be produced by any known chemical or enzymatic method known in the art, such as, for example, methods disclosed in U.S. Patent No. 5,589,357; U.S. Patent No. 4,879,131; U.S. Patent No. 5,039,532; U.S. Patent No. 6,403,142; U.S. Patent Application Publication No. 2003/0035882, or European Patent No. EP 0 01236405. Preparation by chemical synthesis, for example, through synthesis of random peptide polymers using free amino acids and a coupling reagent such as 1-ethyl-3-(3-dimethylaminopropyl)carbodiimide is known in the art. Alternatively, hydrolysate can be prepared using a biological source of protein with one or more enzymes such as protease, for example, trypsin or chymotrypsin; one or more non-enzyme chemical reagents such as an acid, for example, acetic acid; or some combination of enzymes and chemical reagents. A hydrolysate can be a source of protein nutrition. The hydrolysates for use in the present invention can be in any form, including liquid, frozen, desiccated, or dried.

The poultry liver hydrolysate is added to the composition in an amount that is effective in providing enhanced palatability to the composition. Typically, such a palatability enhancing amount may be as little as about 0.01% by weight of the composition or may be as much as about 6% by weight or more of the composition. In certain embodiments, the amount of poultry liver hydrolysate for use as a palatability enhancing agent may be from about 0.01% by weight of the composition to about 5% by weight of the composition. In another embodiment, the amount of poultry liver hydrolysate for use as a palatability enhancing agent may be from about 0.05% by weight of the composition to about 5% by weight of the composition. Unless otherwise specifically indicated, all weights for the compositions of the present invention are based on dry weight of a composition after all components and ingredients are admixed.

The poultry liver hydrolysate should be present at concentrations that are not toxic or otherwise deleterious to an animal's health. Thus, the poultry liver hydrolysate should be present at concentrations that do not cause undesirable effects on digestion, particularly long term undesirable effects on digestion, such as undesirable effects lasting several days or longer. Undesirable effects on digestion may include constipation or diarrhea.

The description provides a variety of compositions containing poultry liver hydrolysate, e.g., foods, nutritional diets, supplements, treats, and food toys such as chewable and consumable toys, in accordance with the use of the invention.

In some aspects, the composition is a food. Both liquid and solid foods are provided. When the food is a liquid, the poultry liver hydrolysate may be admixed with the food. Where the food is solid, the poultry liver hydrolysate may be coated on the food, incorporated into the food, or both. The food includes both dry foods and wet foods. The non-poultry liver hydrolysate components of the food and their typical proportions include those listed in Table 1.

**Table 1**

| Component | Typical proportion of the composition (% dry weight of the composition) |
|---|---|
| Carbohydrate | from about 0% to about 50%, preferably from about 5% to about 45% |
| Protein | from about 5% to about 70%, preferably from about 10% to about 70%, most preferably from about 10% to about 60% |
| Fat | from about 2% to about 50%, preferably from about 5% to about 50%, most preferably from about 5% to about 40% |
| Dietary fiber | from about 0% to about 40%, preferably from about 1% to about 20%, most preferably from about 1% to about 6% |
| Nutritional balancing agents (i.e., vitamins, minerals and trace elements) | from about 0% to about 15%, preferably from about 0% to about 10%, most preferably from about 2% to about 8% |

In one aspect, the description provides a food composition comprising:
(a) at least about 0.01 % poultry liver hydrolysate; and
(b) at least one of the following:
   (i) from about 5% to about 70% (or from about 10% to about 70%, or from about 10% to about 60%) protein, and
   (ii) from about 2% to about 50% (or from about 5% to about 50%, or from about 5% to about 40%) fat.

In another aspect, the composition further comprises at least one of:
(a) no greater than about 50% (or from about 5% to about 45%) carbohydrate,
(b) no greater than about 40% (or from about 1% to about 20%, or from about 1% to about 5.5%) dietary fiber, and
(c) no greater than about 15% (or no greater than about 10%, or from about 2% to about 8%) of one or more nutritional balancing agents

In a further aspect, the description provides a food composition comprising:
(a) from about 0.01 % to about 6% poultry liver hydrolysate,
(b) from about 5% to about 70% (or from about 10% to about 70%, or from about 10% to about 60%) protein,
(c) from about 2% to about 50% (or from about 5% to about 50%, or from about 5% to about 40%) fat,
(d) no greater than about 50% (or from about 5% to about 45%) carbohydrate,
(e) no greater than about 40% (or from about 1% to about 20%, or from about 1% to about 5.5%) dietary fiber, and
(f) no greater than about 15% (or no greater than about 10%, or from about 2% to about 8%) of one or more nutritional balancing agents.

Specific suitable amounts for each component in a composition will depend on a variety of factors such as the species of animal consuming the composition; the particular components included in the composition; the age, weight, general health, sex, and diet of the animal; the animal's consumption rate; and the like. Thus, the component amounts may vary widely, and may even deviate from the proportions set forth herein.

The protein food ingredient is obtained from a variety sources such as plants, animals, or both. Animal protein includes meat, meat by-products, dairy, and eggs. Meats include the flesh from poultry, fish, and animals such as cattle, swine, sheep, goats, and the like. Meat by-products include lungs, kidneys, brain, livers, stomachs, and intestines. The protein food ingredient may also be free amino acids and/or peptides. Preferably, the protein food ingredient comprises meat, a meat by-product, dairy products, or eggs.

The fat and carbohydrate food ingredient is obtained from a variety of sources such as animal fat, fish oil, vegetable oil, meat, meat by-products, grains, other animal or plant sources, and mixtures thereof. Grains include wheat, corn, barley, and rice.

The fiber food ingredient is obtained from a variety of sources such as vegetable fiber sources, e.g., cellulose, beet pulp, peanut hulls, and soy fiber.

Particularly when the composition is an animal food, vitamins and minerals preferably are included in amounts required to avoid deficiency and maintain health. These amounts are readily available in the art. The National Research Council (NRC) provides recommended amounts of such ingredients for farm animals. See, e.g., Nutrient Requirements of Dogs, 1985, National Academy Press, Washington D.C., Nutrient Requirements of Swine (10th Rev. Ed., Nat'1 Academy Press, Wash. D.C., 1998), Nutrient Requirements of Poultry (9th Rev. Ed., Nat'1 Academy Press, Wash. D.C., 1994), Nutrient Requirements of Horses (5th Rev. Ed., Nat'1 Academy Press, Wash. D.C., 1989), etc. The American Feed Control Officials (AAFCO) provides recommended amounts of such ingredients for dogs and cats. See American Feed Control Officials, Inc., Official publication, pages 126-140 (2003).Vitamins generally useful as food additives include vitamin A, vitamin B1, vitamin B2, vitamin B6, vitamin B12, vitamin C, vitamin D, vitamin E, vitamin H (biotin), vitamin K, folic acid, inositol, niacin, and pantothenic acid. Minerals and trace elements generally useful as food additives include calcium, phosphorus, sodium, potassium, magnesium, copper, zinc, choline, and iron.

The compositions may contain additional ingredients such as vitamins, minerals, fillers, palatability enhancers, binding agents, flavors, stabilizers, emulsifiers, sweeteners, colorants, buffers, salts, coatings, and the like known to skilled artisans. Stabilizers include substances that tend to increase the shelf life of the composition such as preservatives, synergists and sequestrants, packaging gases, stabilizers, emulsifiers, thickeners, gelling agents, and humectants. Examples of emulsifiers and/or thickening agents include gelatin, cellulose ethers, starch, starch esters, starch ethers, and modified starches. Specific amounts for each composition component, food ingredient, and other ingredients will depend on a variety of factors such as the particular components and ingredients included in the composition; the species of patient; the patient's age, body weight, general health, sex, and diet; the patient's consumption rate; the type of disease being treated (if any); and the like. Therefore, the ingredient amounts may vary widely and may deviate from the preferred proportions described herein. The amount of such additives in a composition typically is up to about 5% by weight.

The compositions may be or may contain additional ingredients intended to maintain or improve the health of the animal, e.g., supplements, medications, herbs, holistic drugs and compositions, and the like. The present palatability enhancer is particularly useful when the composition is or contains an unpalatable medication such as a drug having less than desirable palatability to an animal, e.g., typical small molecule pharmaceuticals, small proteins, macromolecular proteins and molecules, and antibodies administered orally.

Supplements include a feed used with another feed to improve the nutritive balance or performance of the total. Supplements include compositions that are fed undiluted as a supplement to other feeds, offered free choice with other parts of an animal's ration that are separately available, or diluted and mixed with an animal's regular feed to produce a complete feed. The AAFCO provides a discussion relating to supplements in the American Feed Control Officials, Inc. Official Publication, page 220 (2003).Supplements may be in various forms including powders, liquids, syrups, pills, encapsulated compositions, and the like.

Treats include compositions that are given to an animal to entice the animal to eat during a non-meal time, e.g., dog bones for canines. Treats may be nutritional wherein the composition comprises one or more nutrients, and may have a composition as described above for food on-nutritional treats encompass any other treats that are non-toxic. The poultry liver hydrolysate is coated onto the treat, incorporated into the treat, or both.

Toys include chewable toys such as artificial bones. The poultry liver hydrolysate can form a coating on the surface of the toy or on the surface of a component of the toy, be incorporated partially or fully throughout the toy, or both. In one embodiment, the poultry liver hydrolysate is orally accessible by the intended user. There are a wide range of suitable toys currently marketed, e.g., U.S.Pat.No.5,339,771, U.S.Pat.No.5,419,283, and references disclosed therein. The invention provides both partially consumable toys, e.g., toys comprising plastic components, and fully consumable toys, e.g., rawhides and various artificial bones. Further, the invention provides toys for both human and non-human use, particularly for companion, farm, and zoo animal use, and particularly for dog, cat, or bird use.

In preparing the compositions of the present description, the components are adjusted so that the poultry liver hydrolysate is present in the composition at a concentration of about 0.01% to about 6%, most preferably from about 0.05% to about 5% by weight of the composition. The poultry liver hydrolysate may be incorporated into the composition during the processing of the formulation, such as during and/or after mixing of other components of the composition. Distribution of these components into the composition is accomplished by conventional means.

Compositions of the present description (particularly foods) can be prepared in a dry form using conventional processes. In one aspect, dry ingredients, including animal protein sources, plant protein sources, grains, etc. are ground and mixed together. Moist or liquid ingredients, including fats, oils, animal protein sources, water, etc. are then added to and mixed with the dry mix. The mixture is then processed into kibbles or similar dry pieces. Kibble is often formed using an extrusion process in which the mixture of dry and wet ingredients is subjected to mechanical work at a high pressure and temperature, and forced through small openings and cut off into kibble by a rotating knife. The wet kibble is then dried and optionally coated with one or more topical coatings which may include flavors, fats, oils, powders, and the like. Kibble also can be made from the dough using a baking process, rather than extrusion, wherein the dough is placed into a mold before dry-heat processing.

The palatability enhancing poultry liver hydrolysate may be added to the food composition in its normal preparation procedure such as mixing, extrusion, baking and the like or is preferably added after its preparation post extrusion, such as by spraying or coating the surface of the food. This is particularly desirable for dry foods wherein the extruded strands are contacted with the poultry liver hydrolysate (or a solution comprising the poultry liver hydrolysate) by spraying or coating the extruded strands before the strands are cut into a kibble, or the kibble is contacted with the poultry liver hydrolysate (or a solution comprising the poultry liver hydrolysate) by spraying, coating or dipping the kibble per se.

For topical application to a food, the poultry liver hydrolysate is mixed with a carrier composition to facilitate application to the surface of the food composition. For example, a liquid, slurry, light gel, or watery solid can all be utilized as a carrier for the compound(s) of this composition. A standard spraying or dipping apparatus is employed to apply the compound(s) to the surface of the food composition. An example of such a carrier is a minced animal by-product treated with proteases in conjunction with amino acids, reducing sugar(s) and thiamin. The carrier is then mixed with the poultry liver hydrolysate and coated onto a kibble, thereby preparing a very palatable and acceptable dry food. In a certain preferred embodiment, the poultry liver hydrolysate may simply be mixed with a commercial liquid palatant enhancer or other flavor composition to create a novel flavor palatant which can then be topically applied to the composition. Suitable commercial liquid palatant enhancers for use with the poultry liver hydrolysate in the present invention include any known or commercially available liquid palatant enhancers commercially available from pet food palatant enhancer or other flavor suppliers known to those of skill in the art.

Compositions of the present description (particularly foods) can be prepared in a canned or wet form using conventional pet food processes. In one embodiment, ground animal (e.g., mammal, poultry, fish and/or seafood) proteinaceous tissues are mixed with the other ingredients, including fish oils, cereal grains, other nutritionally balancing ingredients, special purpose additives (e.g., vitamin and mineral mixtures, inorganic salts, cellulose and beet pulp, bulking agents, and the like).Water sufficient for processing may also be added. The wet form ingredients are typically mixed in a vessel suitable for heating while blending the components. Heating of the mixture may be accomplished using any suitable manner, such as by direct steam injection or by using a vessel fitted with a heat exchanger. Following the addition of the last ingredient, the mixture is heated to a temperature range of from about 10°C (50°F) to about 100°C (212°F). Temperatures outside this range are acceptable, but may be commercially impractical without use of other processing aids. When heated to the appropriate temperature, the material will typically be in the form of a thick liquid. The thick liquid is filled into cans. A lid is applied, and the container is hermetically sealed. The sealed can is then placed into conventional equipment designed to sterilize the contents. This is usually accomplished by heating to temperatures of greater than about 110°C (230°F) for an appropriate time, which is dependent on the temperature used and the composition.

For wet foods, the poultry liver hydrolysate can be incorporated into the wet food composition along with a carrier such as an alcohol composition (i.e., propylene glycol or dipropylene glycol), a cyclodextrin, a maltodextrin, or a starch. Alternatively, the poultry liver hydrolysate can be mixed into the dry materials prior to forming the wet food composition.

Treats according to the use of the present invention can be prepared by an extrusion or baking process similar to those described above for dry food. Other processes also may be used to either coat the flavoring composition on the exterior of existing treat forms, or inject it into an existing treat form.

Animal toys according to the use of the present invention are typically prepared by coating any existing toy with a flavoring composition having the poultry liver hydrolysate mixed therein.

In another aspect, the present description provides compositions for animal consumption having enhanced palatability. The compositions comprise a palatability enhancing amount of poultry liver hydrolysate, a palatability enhancing amount of poultry fat, and at least one ingredient suitable for consumption by an animal. Preferably, the compositions comprise at least about 0.01% by weight poultry liver hydrolysate, at least about 0.01% by weight poultry fat, and an ingredient is selected from the group consisting of protein, fat, carbohydrate, and fiber. Any grade of poultry fat is suitable for the present invention, e.g., human edible, pet food and feed grade products. Preferably the poultry fat is chicken fat. The invention is based upon the novel discovery that adding poultry liver hydrolysate and poultry fat to a composition for consumption by an animal enhances palatability of the composition and increases the likelihood that an animal will consume the composition. Adding poultry liver hydrolysate and poultry fat to a composition for consumption also increases the ingestion frequency and ingestion rate of the composition. Surprisingly, the combination of poultry liver hydrolysate and poultry fat enhances the palatability of the composition to a greater extent than the poultry liver hydrolysate alone. The combinations in some cases are synergistic.

The compositions are administered orally using any suitable form for oral administration, e.g., tablets, pills, suspensions, solutions (possibly admixed with drinking water), emulsions, capsules, powders, syrups, and palatable feed compositions (a confectionery for a human or a treat or flavored treat for an animal).In a preferred embodiment, the poultry liver hydrolysate and other elements are admixed during manufacture process used to prepare a food composition for consumption by the patient.

In a further aspect, the present description provides methods for enhancing palatability of a composition for consumption by an animal. The methods comprise adding a palatability enhancing amount of a poultry liver hydrolysate to the composition. In preferred embodiments, the poultry liver hydrolysate is added to the composition is amounts of at least about 0,01% by weight poultry liver hydrolysate, preferably in amounts of from about 0.01% to about 6%, most preferably in amounts of from about 0.05% to about 5%. The invention also provides the products produced according to the methods.

In a further aspect, the present invention provides methods for enhancing palatability of a composition for consumption by an animal. The methods comprise adding a palatability enhancing amount of a poultry liver hydrolysate and a palatability enhancing amount of a poultry fat to the composition. The poultry liver hydrolysate is added to the composition is amounts of from about 0.01% to about 6%, most preferably in amounts of from about 0.05% to about 5% and the poultry fat is added to the composition is amounts of at least about 0.01% by weight poultry fat, preferably in amounts of from about 0.01% to about 6%, most preferably in amounts of from about 0.05% to about 5%.The description also provides the products produced according to the methods. The invention also provides the products produced according to the methods.

The methods are accomplished by supplying the compositions to an animal in various forms. For example, one or more composition elements in separate containers and admixed just prior to administration. In one embodiment, the composition elements and poultry liver hydrolysate are admixed in one container and the resulting composition mixed with other ingredients just prior to administration, e.g., by stirring the poultry liver hydrolysate into or sprinkling the poultry liver hydrolysate onto the other ingredients. In another, one or more ingredients are admixed with the poultry liver hydrolysate during manufacture just prior to administration. In another, the poultry liver hydrolysate is coated onto the other ingredient(s) during the manufacturing process or after the ingredients are manufactured.

In another aspect, the description provides methods for increasing the ingestion frequency or the ingestion rate of a composition for consumption by an animal comprising feeding the animal a composition comprising a palatability enhancing amount of poultry liver hydrolysate and at least one ingredient suitable for consumption by an animal. The poultry liver hydrolysate is added to the composition is amounts of at least about 0.01% by weight poultry liver hydrolysate, preferably in amounts of from about 0.01% to about 6%, most preferably in amounts of from about 0.05% to about 5%.

In another aspect, the description provides methods for manufacturing compositions for animal consumption having enhanced palatability. The method comprises admixing a palatability enhancing amount of poultry liver hydrolysate and at least one ingredient suitable for consumption by an animal. The poultry liver hydrolysate is added to the composition is amounts of at least about 0.01% by weight poultry liver hydrolysate, preferably in amounts of from about 0.01% to about 6%, most preferably in amounts of from about 0.05% to about 5%.

In a further aspect, the description provides a kit for administering a composition for animal consumption having enhanced palatability to an animal comprising in separate containers in a single package a palatability enhancing amount of poultry liver hydrolysate and at least one ingredient suitable for consumption by an animal. In additional aspects, the kit further comprises in separate containers in a single package or in separate containers in a virtual package, as appropriate for the kit component, one or more of (1) instructions for how to combine the poultry liver hydrolysate and the ingredient(s) to produce a composition for animal consumption having enhanced palatability, (2) instructions for how to use the composition of the present invention, particularly for the benefit of the animal, and (3) a gastrointestinal tract improving agent selected from the group consisting of probiotics and prebiotics. When the kit comprises a virtual package, the kit is limited to instructions in a virtual environment in combination with one or more physical kit components. The kit contains the poultry liver hydrolysate in amounts sufficient to enhance the palatability of the ingredient. Generally, kits contain the poultry liver hydrolysate in amounts sufficient to produce a composition having at least about 0.01% poultry liver hydrolysate, most preferably in amounts of from about 0.01% to about 6%, and at least one ingredient selected from the group consisting of protein, fat, carbohydrate, fiber, and combinations thereof. Typically, the poultry liver hydrolysate and the ingredient(s) are admixed just prior to consumption by an animal. In one aspect, the kit contains a packet of poultry liver hydrolysate and a container of food for consumption by an animal. The kit may contain additional items such as a device for mixing the poultry liver hydrolysate and ingredient or a device for containing the admixture, e.g., a food bowl. In another aspect, the poultry liver hydrolysate is mixed with additional nutritional supplements such as vitamins and minerals that promote good health in an animal.

The methods will be found especially beneficial if an animal is, or has become, finicky, has poor appetite, or is in ill health, all of which can occur in animals of all ages but especially in aged animals. The method is especially beneficial if the food composition is one to which the animal is unaccustomed or if the food composition contains ingredients or a balance of ingredients designed to improve health or wellness with less emphasis on palatability.

In another aspect, the description provides a means for communicating information about or instructions for admixing and administering the poultry liver hydrolysate and the ingredients. The communicating means comprises a document, digital storage media, optical storage media, audio presentation, or visual display containing the information or instructions. Preferably, the communication is a displayed web site or a brochure, product label, package insert, advertisement, or visual display containing such information or instructions. Useful information includes one or more of (1) methods and techniques for combining and administering the poultry liver hydrolysate and ingredient(s) and (2) contact information for patients to use if they have a question about the invention and its use. Useful instructions include amounts for mixing and administration amounts and frequency. The communication means is useful for instructing on the benefits of using the present invention and communicating the approved methods for administering the invention to an animal.

In a further aspect, the description provides compositions for animal consumption having enhanced palatability and a beneficial effect on the gastrointestinal tract. The compositions comprise a palatability enhancing amount of poultry liver hydrolysate, at least one ingredient suitable for consumption by an animal, and a gastrointestinal tract improving agent selected from the group consisting of probiotics and prebiotics. Probiotics are live microorganisms that have a beneficial effect in the prevention and treatment of specific medical conditions when ingested. Probiotics are believed to exert biological effects through a phenomenon known as colonization resistance. The probiotics facilitate a process whereby the indigenous anaerobic flora limits the concentration of potentially harmful (mostly aerobic) bacteria in the digestive tract. Other modes of action, such as supplying enzymes or influencing enzyme activity in the gastrointestinal tract, may also account for some of the other functions that have been attributed to probiotics. Prebiotics are nondigestible food ingredients that beneficially affect host health by selectively stimulating the growth and/or activity of bacteria in the colon. The prebiotic, fructooligosaccharide (FOS) is found naturally in many foods such as wheat, onions, bananas, honey, garlic, and leeks. FOS can also be isolated from chicory root or synthesized enzymatically from sucrose. FOS fermentation in the colon results in a large number of physiologic effects including increasing the numbers of bifidobacteria in the colon, increasing calcium absorption, increasing fecal weight, shortening of gastrointestinal transit time, and possibly lowering blood lipid levels. The increase in bifidobacteria has been assumed to benefit human health by producing compounds to inhibit potential pathogens, by reducing blood ammonia levels, and by producing vitamins and digestive enzymes. Probiotic bacteria such as Lactobacilli or Bifidobacteria are believed to positively affect the immune response by improving the intestinal microbial balance leading to enhanced antibody production and phagocytic (devouring or killing) activity of white blood cells. Bifidobacterium lactis could be an effective probiotic dietary supplement for enhancing some aspects of cellular immunity in the elderly. Probiotics enhance systemic cellular immune responses and may be useful as a dietary supplement to boost natural immunity in otherwise healthy adults. Probiotics include many types of bacteria but generally are selected from four genera of bacteria: Lactobacilllus acidophillus, Bifidobacteria, Lactococcus, and Pediococcus. The amount of probiotics and prebiotics to be administered to the animal is determined by the skilled artisan based upon the type and nature of the probiotic and prebiotic and the type and nature of the animal, e. g., the age, weight, general health, sex, extent of microbial depletion, presence of harmful bacteria, and diet of the animal. Generally, probiotics are administered to the animal in amounts of from about one to about twenty billion colony forming units (CFUs) per day for the healthy maintenance of intestinal microflora, preferably from about 5 billion to about 10 billion live bacteria per day. Generally, prebiotics are administered in amounts sufficient to positively stimulate the healthy microflora in the gut and cause these "good" bacteria to reproduce. Typical amounts are from about one to about 10 grams per serving or from about 5 percent to about 40 percent of the recommended daily dietary fiber for an animal. The probiotics and prebiotics can be made part of the composition by any suitable means. Generally, the agents are mixed with the composition or applied to the surface of the composition, e.g., by sprinkling. When the agents are part of a kit, the agents can be admixed with other materials or in their own package.

The compositions and methods described are useful for a variety of human and non-human animals, including avian, bovine, canine, equine, feline, hicrine, murine, ovine, and porcine animals. Preferably, the animal is a canine or feline.

The compositions, methods, and kits are useful for increasing the amount of food consumed by an animal when increased food intake is desirable.

### Examples

The invention can be further illustrated by the following examples of preferred embodiments thereof, although it will be understood that these examples are included merely for purposes of illustration and are not intended to limit the scope of the invention unless otherwise specifically indicated.

### Example 1

This example demonstrates the effect of poultry fat and/or liver hydrolysate as a palatability enhancer when added to a dry, commercial large breed adult dog food composition (control). The control comprised corn, poultry by-product meal, soybean meal, choice white grease, soybean oil, palatability enhancer, flaxseed, egg, iodized salt, L-carnitine, chicken cartilage, choline chloride, vitamin E, vitamin premix, taurine, potassium chloride, and mineral premix.

Four test compositions were compared against the control composition in a palatability test. Palatability was determined by comparing each test composition with the control composition in a standard two-bowl preference test over two days with 25 dogs. The tests were conducted by providing the animals access to equal amounts (approximately 500 g) of a test composition and the control composition at the same time. At the end of 45 minutes, the compositions were collected and weighed to determine how much of each composition was consumed.

Test composition 1 comprised the control composition with poultry fat substituted for choice white grease. Test composition 2 comprised the control composition with poultry fat substituted for choice white grease and liver hydrolysate substituted for the palatability enhancer. Test composition 3 comprised the control with liver hydrolysate. Test composition 4 comprised the control with poultry fat substituted for choice white grease and liver hydrolysate.

Preference for each test composition was compared to the control composition and assigned a rating of "win", "parity" or "loss" as determined by statistical analysis. A "win" indicates that the test composition was more preferred than the control composition. "Parity" means that the difference in preference for the test composition and the control composition was not found to be statistically significant. A "loss" indicates that the animals preferred the control composition over the test composition. It is important to note that a portion of the animals in the test may not have demonstrated a true preference such that a sum of all results would not necessarily equal 100%.

Results are shown below in Table 2. No evidence of any intolerance to the compositions was observed in the dogs following intake.

**Table 2**

| Test Composition | Status Versus Control | Intake Ratio | % Pref. Test | % Pref. Control |
|---|---|---|---|---|
| 1 | Loss | 0.2735 | 25.0 | 70.8 |
| 2 | Win | 0.6304 | 68.0 | 28.0 |
| 3 | Win | 0.7166 | 80.0 | 20.0 |
| 4 | Parity | 0.4867 | 44.0 | 56.0 |

### Example 2

This example demonstrates the effect of poultry fat and/or liver hydrolysate as a palatability enhancer when added to a dry, commercial large breed light dog food composition (control). The control comprised corn, soybean mill run, poultry by-product meal, peanut hulls, corn gluten meal, soybean meal, soybean oil, palatability enhancer, egg, palatability enhancer 2, di-calcium phosphate, iodized salt, L-carnitine, vitamin premix, potassium chloride, chicken cartilage, flaxseed, choline chloride, vitamin E, L-lysine, mineral premix, taurine, and L-tryptophan.

Seven test compositions were compared against the control composition in a palatability test as described in Example 1. The seven test compositions were as follows: test composition 1 comprised the control with poultry fat added in place of some soybean oil (decreased by approximately 1% from control); test composition 2 comprised the control with poultry fat added, and wheat and milo substituted for corn; test composition 3 comprised the control with poultry fat added, wheat and milo substituted for corn, and liver hydrolysate as the palatability enhancer; test composition 4 comprised the control with poultry fat added and with chicken liver hydrolysate (3.5%) substituted for the palatability enhancer; test composition 5 comprised the control with poultry fat added and with chicken liver hydrolysate (2.4%) substituted for the palatability enhancer; test composition 6 comprised the control with poultry fat added and with chicken liver hydrolysate (1.5%) substituted for the palatability enhancer; and test composition 7 comprised the control with poultry fat in the place of some soybean oil (decreased by approximately 1% from control), wheat and milo added to replace some corn, and liver hydrolysate as the palatability enhancer.

Palatability was determined by comparing each test composition and the control composition in a palatability test as described in Example 1. Results are shown below in Table 3. No evidence of any intolerance to the compositions was observed in the dogs following intake.

**Table 3**

| Exp. No. | Test Composition | Status Versus Control | Intake Ratio | % Pref. Test | % Pref. Control |
|---|---|---|---|---|---|
| 1 | 1 | Parity | 0.5352 | 56.0 | 44.0 |
| 2 | 2 | Parity | 0.5854 | 68.0 | 32.0 |
| 3 | 3 | Win | 0.6457 | 68.0 | 32.0 |
| 4 | 4 | Win | 0.8192 | 92.0 | 8.0 |
| 5 | 5 | Win | 0.6530 | 68.2 | 31.8 |
| 6 | 6 | Loss | 0.1514 | 8.0 | 92.0 |
| 7 | 7 | Parity | 0.5685 | 62.5 | 37.5 |

### Example 3

This example demonstrates the effect of poultry fat and/or liver hydrolysate as a palatability enhancer when added to a dry, commercial large breed growth dog food composition (control). The control comprised corn, poultry by-product meal, corn gluten meal, beet pulp, palatability enhancer, choice white grease, soybean oil, iodized salt, potassium chloride, L-lysine, L-carnitine, choline chloride, vitamin E, vitamin premix, L-tryptophan, calcium carbonate, and mineral premix.

Four test compositions were compared against the control composition in a palatability test as described in Example 1. The four test compositions were as follows: test composition 1 comprised the control with liver hydrolysate as the palatability enhancer; test composition 2 comprised the control with poultry fat substituted for choice white grease; test composition 3 comprised the control with liver hydrolysate as the palatability enhancer and poultry fat substituted for choice white grease; and test composition 4 comprised the control with liver hydrolysate and 0.5% brewer's yeast as the palatability enhancer and poultry fat substituted for choice white grease.

Palatability was determined by comparing each test composition and the control composition in a palatability test as described in Example 1. Results are shown below in Table 4. No evidence of any intolerance to the compositions was observed in the dogs following intake.

**Table 4**

| Exp. No. | Test Composition | Status versus Control | Intake Ratio | % Pref. Test | % Pref. Control |
|---|---|---|---|---|---|
| 1 | 1 | Win | 0.8939 | 100.0 | 0.0 |
| 2 | 2 | Win | 0.7757 | 88.0 | 12.0 |
| 3 | 3 | Win | 0.8143 | 84.0 | 16.0 |
| 4 | 4 | Win | 0.6923 | 76.0 | 24.0 |

### Example 4

This example demonstrates the effect of poultry fat and/or liver hydrolysate as a palatability enhancer when added to a dry, commercial large breed senior dog food composition (control). The control comprised corn, poultry by-product meal, choice white grease, soybean mill run, flaxseed, palatability enhancer, egg, potassium chloride, L-carnitine, choline chloride, chicken cartilage, processing aid, vitamin E, vitamin premix, iodized salt, taurine, L-tryptophan, L-lysine, mineral premix, di-calcium phosphate, DL-methionine, and L-arginine.

Three test compositions were compared against the control composition in a palatability test as described in Example 1. The three test compositions were as follows: test composition 1 comprised the control with poultry fat substituted for choice white grease; test composition 2 comprised the control with poultry fat substituted for choice white grease and poultry liver hydrolysate as the palatability enhancer; and test composition 3 comprised the control with poultry fat substituted for choice white grease and poultry liver hydrolysate as the palatability enhancer.

**Table 5**

| Exp. No. | Test Composition | Status versus Control | Intake Ratio | % Pref. Test | % Pref. Control |
|---|---|---|---|---|---|
| 1 | 1 | Loss | 0.3277 | 28.0 | 72.0 |
| 2 | 2 | Loss | 0.3073 | 32.0 | 68.0 |
| 3 | 3 | Win | 0.7266 | 84.0 | 16.0 |

### Example 5

This example demonstrates the effect of poultry fat and/or liver hydrolysate as a palatability enhancer when added to a dry, commercial cat senior food composition (control). The control comprised poultry by-product meal, brewer's rice, corn gluten meal, corn, choice white grease, soybean mill run, palatability enhancer, cellulose, potassium chloride, choline chloride, calcium carbonate, iodized salt, calcium sulfate, yeast, DL-methionine, vitamin E, vitamin premix, potassium citrate, taurine, fish oil, mineral premix, and L-arginine.

Eight test compositions were compared against the control composition in a palatability test as described below. The eight test compositions were as follows: test composition 1 comprised the control with poultry fat substituted for choice white grease; test composition 2 comprised the control without brewer's rice, but with poultry fat substituted for choice white grease; test composition 3 comprised the control without brewer's rice, but with poultry fat substituted for choice white grease and low cost brewer's yeast and methionine on the outside of the kibble; test composition 4 comprised the control without brewer's rice, but with poultry fat substituted for choice white grease and 0.5% liquid brown oxide; test composition 5 comprised the control without corn, but with increased corn gluten meal, 45% animal protein, poultry fat substituted for choice white grease, and poultry liver hydrolysate as the palatability enhancer; test composition 6 comprised the control without corn, but with increased corn gluten meal, 45% animal protein, and poultry liver hydrolysate as the palatability enhancer; test composition 7 comprised the control without corn, but with increased corn gluten meal, 45% animal protein, poultry fat substituted for choice white grease, and poultry liver hydrolysate as the palatability enhancer (34% crude protein); and test composition 8 comprised the control with pork liver hydrolysate as the palatability enhancer.

Each test composition was compared against a control composition in a palatability test. Palatability was determined by comparing a test composition and the control composition in a standard two-bowl preference test over two days with 25 cats. The tests were conducted by providing the animals access to equal amounts (approximately 120 g) of a test composition and the control composition at the same time. At the end of 20 hours, the compositions were collected and weighed to determine how much of each composition was consumed. Results are shown below in Table 6. No evidence of any intolerance to the compositions was observed in the cats following intake.

**Table 6**

| Exp. No. | Test Composition | Status versus Control | Intake Ratio | % Pref. Test | % Pref. Control |
|---|---|---|---|---|---|
| 1 | 1 | Win | 0.6338 | 68.0 | 32.0 |
| 2 | 2 | Parity | 0.5411 | 54.2 | 45.8 |
| 3 | 3 | Parity | 0.5211 | 56.5 | 43.5 |
| 4 | 4 | Parity | 0.5092 | 48.0 | 52.0 |
| 5 | 5 | Loss | 0.1427 | 4.2 | 95.8 |
| 6 | 6 | Loss | 0.2054 | 4.2 | 91.7 |
| 7 | 7 | Loss | 0.1082 | 0.0 | 100.0 |
| 8 | 8 | Loss | 0.1034 | 4.2 | 95.8 |

In the specification, there have been disclosed typical preferred embodiments of the invention and, although specific terms are employed, they are used in a generic and descriptive sense only and not for purposes of limitation, the scope of the invention being set forth in the following claims.

## Claims

1. Use of poultry liver hydrolysate and poultry fat to enhance the palatability of a composition for animal consumption, wherein the composition comprises from 0.01% to 6% poultry liver hydrolysate by weight of the composition, and poultry fat, and wherein the composition further comprises at least one ingredient suitable for consumption by an animal.

2. The use of claim 1 wherein the ingredient is selected from the group consisting of protein, fat, carbohydrate, fiber, and combinations thereof.

3. The use of claim 1 or claim 2, wherein the composition is a food, a nutritional diet, a supplement, an animal treat, or a toy.

4. The use of any of claims 1 to 3, wherein the poultry fat comprises at least about 0.01 % by weight of the composition.

5. The use of claim 4 wherein the poultry fat comprises from 0.01% to 6% by weight of the composition.

6. The use of any preceding claim wherein the composition further comprises a gastrointestinal tract improving agent selected from the group consisting of probiotics and prebiotics.

7. A method for enhancing palatability of a composition for consumption by an animal, the method comprising adding an amount of poultry liver hydrolysate to the composition, which amount is from 0.01% to 6% by weight of the composition, and adding poultry fat to the composition, wherein the poultry liver hydrolysate and poultry fat are used to enhance palatability of the composition.

8. The method of claim 7 wherein the poultry fat comprises at least 0.01% by weight of the composition.

9. The method of claim 8 wherein the poultry fat comprises from 0.01% to 6% by weight of the composition.

10. The method of any of claims 7 to 9 wherein the composition is a nutritional diet, a food, a supplement, an animal treat, or a toy.

11. Use of poultry liver hydrolysate and poultry fat for increasing the ingestion frequency or the ingestion rate of a composition for consumption by an animal, which composition comprises from 0.01% to 6% poultry liver hydrolysate by weight of the composition and poultry fat for enhancing the palatability of the composition when fed to the animal, and at least one ingredient suitable for consumption by an animal.

12. The use of claim 11 wherein the poultry fat comprises at least 0.01% by weight of the composition.

13. The use of claim 12 wherein the poultry fat comprises from 0.01% to 6% by weight of the composition.

## Patentansprüche

1. Verwendung von Geflügelleberhydrolysat und Geflügelfett, um die Schmackhaftigkeit einer Zusammensetzung zum tierischen Verzehr zu erhöhen, wobei die Zusammensetzung von 0,01% bis 6% Geflügelleberhydrolysat bezogen auf das Gewicht der Zusammensetzung, und Geflügelfett, umfasst, und wobei die Zusammensetzung weiterhin mindestens einen Bestandteil umfasst, der zum Verzehr durch ein Tier geeignet ist.

2. Verwendung nach Anspruch 1, wobei der Bestandteil aus der Gruppe bestehend aus Protein, Fett, Kohlenhydrat, Faser und Kombinationen davon ausgewählt ist.

3. Verwendung nach Anspruch 1 oder Anspruch 2, wobei die Zusammensetzung ein Lebensmittel, eine nahrhafte Kost, ein Ergänzungsmittel, eine Tierbelohnung, oder ein Spielzeug ist.

4. Verwendung nach einem beliebigen der Ansprüche 1 bis 3, wobei das Geflügelfett mindestens etwa 0,01% bezogen auf das Gewicht der Zusammensetzung umfasst.

5. Verwendung nach Anspruch 4, wobei das Geflügelfett von 0,01% bis 6% bezogen auf das Gewicht der Zusammensetzung umfasst.

6. Verwendung nach einem beliebigen der voranstehenden Ansprüche, wobei die Zusammensetzung weiterhin ein den Magen-Darm-Trakt verbesserndes Mittel umfasst, das aus der Gruppe bestehend aus Probiotika und Präbiotika ausgewählt ist.

7. Verfahren zum Erhöhen der Schmackhaftigkeit einer Zusammensetzung zum Verzehr durch ein Tier, wobei das Verfahren Zugeben einer Menge an Geflügelleberhydrolysat zur Zusammensetzung, welche Menge von 0,01% bis 6% bezogen auf das Gewicht der Zusammensetzung beträgt, und Zugeben von Geflügelfett zur Zusammensetzung umfasst, wobei das Geflügelleberhydrolysat und das Geflügelfett verwendet werden, um die Schmackhaftigkeit der Zusammensetzung zu erhöhen.

8. Verfahren nach Anspruch 7, wobei das Geflügelfett mindestens 0,01% bezogen auf das Gewicht der Zusammensetzung umfasst.

9. Verfahren nach Anspruch 8, wobei das Geflügelfett von 0,01% bis 6% bezogen auf das Gewicht der Zusammensetzung umfasst.

10. Verfahren nach einem beliebigen der Ansprüche 7 bis 9, wobei die Zusammensetzung eine nahrhafte Kost, ein Lebensmittel, ein Ergänzungsmittel, eine Tierbelohnung, oder ein Spielzeug ist.

11. Verwendung von Geflügelleberhydrolysat und Geflügelfett zum Erhöhen der Aufnahmehäufigkeit oder Aufnahmegeschwindigkeit einer Zusammensetzung zum Verzehr durch ein Tier, welche Zusammensetzung von 0,01% bis 6% Geflügelfett bezogen auf das Gewicht der Zusammensetzung und Geflügelfett zum Erhöhen der Schmackhaftigkeit der Zusammensetzung, wenn sie an ein Tier verfüttert wird, und mindestens einen Bestandteil, der zum Verzehr durch ein Tier geeignet ist, umfasst.

12. Verwendung nach Anspruch 11, wobei das Geflügelfett mindestens 0,01% bezogen auf das Gewicht der Zusammensetzung umfasst.

13. Verwendung nach Anspruch 12, wobei das Geflügelfett von 0,01% bis 6% bezogen auf das Gewicht der Zusammensetzung umfasst.

## Revendications

1. Utilisation d'hydrolysat de foie de volaille et de graisse de volaille pour améliorer la palatabilité d'une composition destinée à la consommation animale, dans laquelle la composition comprend de 0,01 % à 6 % d'hydrolysat de foie de volaille en poids de la composition, et de la graisse de volaille, et dans laquelle la composition comprend en outre au moins un ingrédient approprié à la consommation par un animal.

2. Utilisation selon la revendication 1, dans laquelle l'ingrédient est choisi dans le groupe constitué par une protéine, une matière grasse, un glucide, une fibre et les combinaisons de ceux-ci.

3. Utilisation selon la revendication 1 ou la revendication 2, dans laquelle la composition est un aliment, un régime nutritionnel, un complément, un traitement animal ou un jouet.

4. Utilisation selon l'une quelconque des revendications 1 à 3, dans laquelle la graisse de volaille constitue au moins environ 0,01 % en poids de la composition.

5. Utilisation selon la revendication 4, dans laquelle la graisse de volaille constitue de 0,01 % à 6 % en poids de la composition.

6. Utilisation selon l'une quelconque des revendications précédentes, dans laquelle la composition comprend en outre un agent améliorant le tractus gastrointestinal choisi dans le groupe constitué par les probiotiques et les prébiotiques.

7. Procédé pour améliorer la palatabilité d'une composition destinée à la consommation par un animal, le procédé comprenant l'ajout d'une quantité d'hydrolysat de foie de volaille à la composition, laquelle quantité est comprise entre 0,01 % et 6 % en poids de la composition et l'ajout de graisse de volaille à la composition, dans laquelle l'hydrolysat de foie de volaille et la graisse de volaille sont utilisés pour améliorer la palatabilité de la composition.

8. Procédé selon la revendication 7, dans lequel la graisse de volaille constitue au moins 0,01 % en poids de la composition.

9. Procédé selon la revendication 8, dans lequel la graisse de volaille constitue de 0,01 % à 6 % en poids de la composition.

10. Procédé selon l'une quelconque des revendications 7 à 9, dans lequel la composition est un régime nutritionnel, un aliment, un complément, un traitement animal ou un jouet.

11. Utilisation d'hydrolysat du foie de volaille et de graisse de volaille pour augmenter la fréquence d'ingestion ou le taux d'ingestion d'une composition destinée à la consommation par un animal, composition qui comprend de 0,01 % à 6 % d'hydrolysat de foie de volaille en poids de la composition et de la graisse de volaille pour améliorer la palatabilité de la composition lorsqu'elle est fournie à l'animal, et au moins un ingrédient approprié à la consommation par un animal.

12. Utilisation selon la revendication 11, dans laquelle la graisse de volaille constitue au moins 0,01 % en poids de la composition.

13. Utilisation selon la revendication 12, dans laquelle la graisse de volaille constitue de 0,01 % à 6 % en poids de la composition.
